# EUROPEAN PATENT APPLICATION

(11) **EP 4 838 176 A1**
(43) Date of publication of application: **11.11.2026**
(21) Application number: 25179790.8
(22) Date of filing: 30.05.2025
(51) Int. Cl.: G01C 21/34, G01C 21/36, G08G 1/16

(54) **GUIDANCE INSTRUCTION METHOD AND GUIDANCE PROCESSING APPARATUS**

(30) Priority: 06.05.2025 TW 114116897
(71) Applicant: Wistron Corporation, New Taipei City 22181 (TW)
(72) Inventor: LIN, Hsiu Mei, 22181 New Taipei City (TW); JING, Ming Chiuan, 22181 New Taipei City (TW)
(74) Representative: Becker, Eberhard

(57) **Abstract**

Provided are a guidance instruction method and a guidance processing apparatus (100). In the method, a guidance image (GIM1, GIM2) is displayed. A positional relationship between a warning object in an environment image and a virtual guidance line (GL1, GL2, GL3, GL4) is determined. A warning message is generated based on the positional relationship. The one or more virtual guidance lines (GL1, GL2, GL3, GL4) in the guidance image (GIM1, GIM2) correspond to a forward route of a vehicle. A visual field of the environment image corresponds to the forward route of the vehicle. The warning message is configured to indicate the warning object. In this way, driving safety can be enhanced.

## Description

### TECHNICAL FIELD

The disclosure relates to an image processing technology, and particularly relates to a guidance instruction method and a guidance processing apparatus.

### BACKGROUND

Automobile technology continues to develop. There are now many vehicle display systems and driver assistance systems. The purpose of the systems is to improve safety and convenience.

However, existing technology is still insufficient in certain situations. When a driver is driving in a narrow place (such as a narrow road, a country lane, passing in a narrow alley, or roadside parking), the driver needs to accurately know the width of the vehicle and the relative position. If relying only on traditional instruments, rearview mirrors, or existing display systems or assistance systems warnings, the driver might find it difficult to accurately determine a real-time and accurate distance between the vehicle body (especially a side of the vehicle and a tire) and a road edge, an obstacle, or other vehicles.

This difficulty in determination may easily lead to the driver scratching the vehicle body, colliding with nearby vehicles, or even driving off the road and falling into ditches and other accidents due to a misjudgment of the vehicle position. This problem may be more significant for novice drivers or drivers driving in unfamiliar or narrow environments.

### SUMMARY

The disclosure provides a guidance instruction method and a guidance processing apparatus, which can provide intuitive driving assistance instructions.

The guidance instruction method of the embodiment of the disclosure is implemented through a processor. The guidance instruction method includes (but is not limited to) the following steps: a guidance image is displayed; at least one virtual guidance lines in the guidance image corresponds to a forward route of a vehicle; a positional relationship between a warning object in an environment image and the at least one virtual guidance line is determined; a visual field of the environment image corresponds to the forward route of the vehicle; a warning message is generated according to the positional relationship; and the warning message is configured to indicate the warning object.

The guidance processing apparatus of the embodiment of the disclosure includes (but is not limited to) a memory and a processor. The memory stores code. The processor is coupled to the memory, loads the code and executes: displaying a guidance image that at least one virtual guidance line in the guidance image corresponds to a forward route of a vehicle; determining a positional relationship between a warning object in an environment image and the at least one virtual guidance line that a visual field of the environment image corresponds to the forward route of the vehicle; and generating a warning message according to the positional relationship that the warning message is configured to indicate the warning object.

Based on the above, the guidance instruction method and the guidance processing apparatus may display the virtual guidance line representing the forward route of the vehicle, detect a relative position between the virtual guidance line and the warning object in the actual environment, and accordingly send a warning. In this way, a direct guidance instruction can be provided, thereby enhancing driving safety.

In order to make the features and advantages of the disclosure more comprehensible, the following embodiments are given and described in detail with the accompanying drawings as follows.

### BRIEF DESCRIPTION OF THE DRAWINGS

FIG. 1 is an element block diagram of a driving system according to an embodiment of the disclosure.
FIG. 2 is a hardware architecture diagram according to an embodiment of the disclosure.
FIG. 3 is a flow chart of a calibration method for a virtual guidance line according to an embodiment of the disclosure.
FIG. 4A is a schematic diagram of a calibration scenario according to an embodiment of the disclosure.
FIG. 4B is a schematic diagram of a disposal position according to an embodiment of the disclosure.
FIG. 4C is a schematic diagram of a calibration object according to an embodiment of the disclosure.
FIG. 5 is a schematic diagram of a coordinate conversion architecture according to an embodiment of the disclosure.
FIG. 6 is a schematic diagram of a coordinate conversion process according to an embodiment of the disclosure.
FIG. 7 is a schematic diagram of a guidance image according to an embodiment of the disclosure.
FIG. 8 is a flow chart of a guidance instruction method according to an embodiment of the disclosure.
FIG. 9A is a schematic diagram of a first application scenario according to an embodiment of the disclosure.
FIG. 9B is a schematic diagram of a second application scenario according to an embodiment of the disclosure.
FIG. 10A is a schematic diagram of a third application scenario according to an embodiment of the disclosure.
FIG. 10B is a schematic diagram of a fourth application scenario according to an embodiment of the disclosure.

### DESCRIPTION OF THE EMBODIMENTS

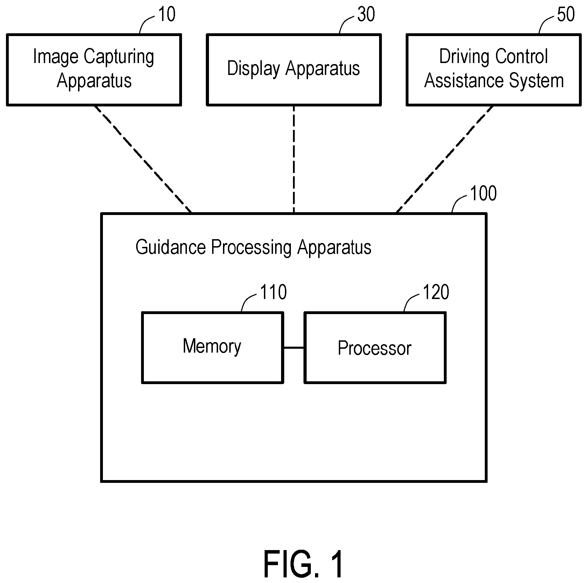

FIG. 1 is an element block diagram of a driving system 1 according to an embodiment of the disclosure. Please refer to FIG. 1. The driving system 1 includes (but is not limited to) one or more image capturing apparatus 10, a display apparatus 30, a driving control assistance system 50, and a guidance processing apparatus 100.

The image capturing apparatus 10 may be a camera, video camera or other apparatus, module or element having image capture capabilities. The image capturing apparatus 10 may include elements such as an image sensor (such as charge coupled apparatus (CCD), or complementary metal-oxide-semiconductor (CMOS)), an optical lens, or an image control circuit. In the embodiment of the disclosure, the image capturing apparatus 10 is configured to capture toward the outside. For example, the image capturing apparatus 10 is disposed in an interior rearview mirror of a vehicle (such as a car, bus, truck or motorcycle), and captures toward a front of the vehicle to obtain an environment image. A visual field of the environment image corresponds to a forward route of the vehicle. The environment image is an image captured by the image capturing apparatus 10 capturing the environment. The environment is, for example, a road, a parking lot or outdoors. However, the disclosure is not limited thereto.

The display apparatus 30 may be a head-up display (HUD). The head-up display includes (but is not limited to) a picture generation unit (PGU) (such as a thin film transistor liquid crystal display (TFT-LCD), digital light processing (DLP), laser scanning), an optical system (such as reflective mirrors, lenses) and a display medium (such as a reflector or a (front) windshield of a vehicle). In some embodiments, the display apparatus 30 may be an LCD, LED, OLED or mini-LED display, or may also be a video playback equipment with digital light processing (DLP), liquid-crystal display (LCD), light emitting diode (LED) or other projection display technology. In an embodiment, the display apparatus 30 is configured to display images. The display apparatus 30 is, for example, a central control screen of a vehicle, or a head-up display.

The driving control assistance system 50 includes (but is not limited to) a sensing element (such as the image capturing apparatus 10, a radar, lidar, vehicle status sensor and/or positioning system), an electronic control unit (ECU), an actuator (such as a steering system actuator, braking system actuator, or power system control interface), a human-machine interface (HMI) element (such as a central control screen, instrument panel, or indicator light), a communication network (such as a Controller Area Network (CAN/CAN-FD), or High-Speed Serial Interface (GMSL2 or FPD-Link, etc.)).

The guidance processing apparatus 100 is disposed in the vehicle. The guidance processing apparatus 100 is communicatively connected to the image capturing apparatus 10, the display apparatus 30, and the driving control assistance system 50.

The guidance processing apparatus 100 includes (but is not limited to) a memory 110 and a processor 120.

The memory 110 may be any type of fixed or movable random access memory (RAM), read only memory (ROM), flash memory, conventional hard disk drive (HDD), solid-state drive (SSD) or similar element. In an embodiment, the memory 110 is configured to store code, software modules, configuration settings, data (such as images, messages, or coordinates) or files. The embodiments thereof will be described in detail later.

The processor 120 is coupled to the memory 110. The processor 120 may be a central processing unit (CPU), graphic processing unit (GPU), or other programmable general-purpose or special-purpose microprocessor, digital signal processor (DSP), programmable controller, field programmable gate array (FPGA), application-specific integrated circuit (ASIC), neural network accelerator or other similar element or a combination of the elements. In an embodiment, the processor 120 is configured to execute all or part of the operations of the guidance processing apparatus 100, and may load and execute various codes, software modules, files and data stored by the memory 110. In some embodiments, the functions of the processor 120 may be implemented through software or chips.

In an embodiment, the processor 120 is an electronic control unit of the driving control assistance system 50. In another embodiment, the processor 120 and an electronic control unit of the driving control assistance system 50 are independent processing elements.

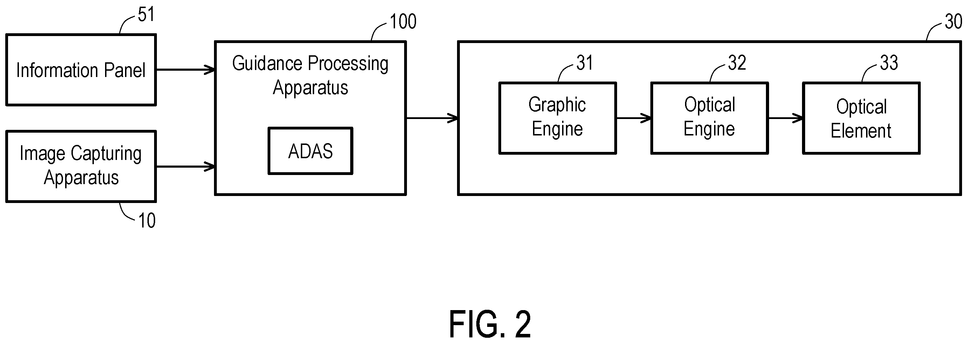

FIG. 2 is a hardware architecture diagram according to an embodiment of the disclosure. Please refer to FIG. 2. The image capturing apparatus 10 is disposed on the vehicle, such as at a front of the vehicle, and configured to capture images of the front or surrounding environment of the vehicle (that is, the foregoing environment image). In an embodiment, the image capturing apparatus 10 may transmit a captured high-definition image data in real-time to the guidance processing apparatus 100 (or the driving control assistance system 50) through a Gigabit Multimedia Serial Link 2 (GMSL2) interface. The processor 120 or the electronic control unit is a high-performance computing (HPC) unit, and is configured to run related algorithms of advanced driver assistance systems (ADAS).

The guidance processing apparatus 100 receives image data (such as an environment image) from the image capturing apparatus 10, and processes and analyzes the image data. The display apparatus 30 takes an augmented reality head-up display (AR HUD) as an example. The display apparatus 30 is responsible for generating and projecting images (such as a guidance image introduced later) into the driver's visual field. In the embodiment, the display apparatus 30 may include a graphic engine 31, an optical engine (such as a picture generation unit (PGU)) 32 and an optical element 33.

The graphic engine 31 may be, for example, a microcontroller (MCU), which receives processing results from the guidance processing apparatus 100 through a vehicle communication bus (such as a Controller Area Network Flexible Data-Rate (CAN-FD)). The graphic engine 31 calculates the coordinates, shape, and style of a virtual object (such as a virtual guidance line or a warning message introduced later) in the guidance image according to the received information and preset vehicle parameters (such as a vehicle width or wheelbase) or calibration data. The graphic engine 31 may convert and project two-dimensional or three-dimensional coordinates and/or icons into three-dimensional spatial coordinates that are compatible with the driver's viewing angle.

The optical engine 32 is electrically connected to the graphic engine 31. The optical engine 32 generates an actual optical image according to the image data (such as a virtual guidance line or a warning message) output by the graphic engine 31.

The optical element 33 is, for example, an optical mirror, lens assembly, etc., and is configured to project the optical image generated by the optical engine 32 to the front windshield, reflector or combiner of the vehicle, allowing the driver to see the image (the guidance image introduced later) that is superimposed on the actual environment in front of the line of sight thereof.

In addition, the driving control assistance system 50 may include an information panel 51 (such as an in-vehicle infotainment (IVI)). The information panel 51 may be electrically connected to the guidance processing apparatus 100. For example, communication may be performed through MQTT protocol or other automotive buses (such as CAN). The information panel 51 serves as a user interface to allow the driver to enable or disable the guide instruction function of the embodiment, and may display system status or receive other related information from the guidance processing apparatus 100.

For ease of understanding of the process of operating the embodiment of the disclosure, the following will provide numerous embodiments to describe in detail the operation process of the embodiment of the disclosure. In the following, the method of the embodiment of the disclosure will be described in conjunction with the various apparatus and the elements or modules in FIG. 1 and FIG. 2.

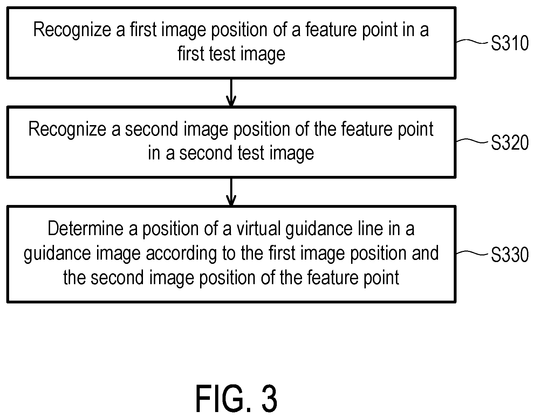

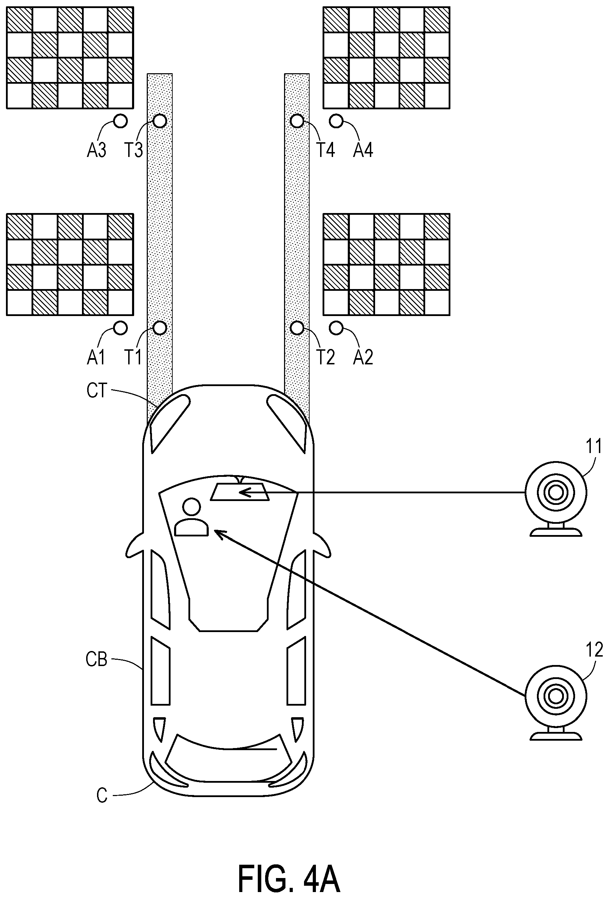

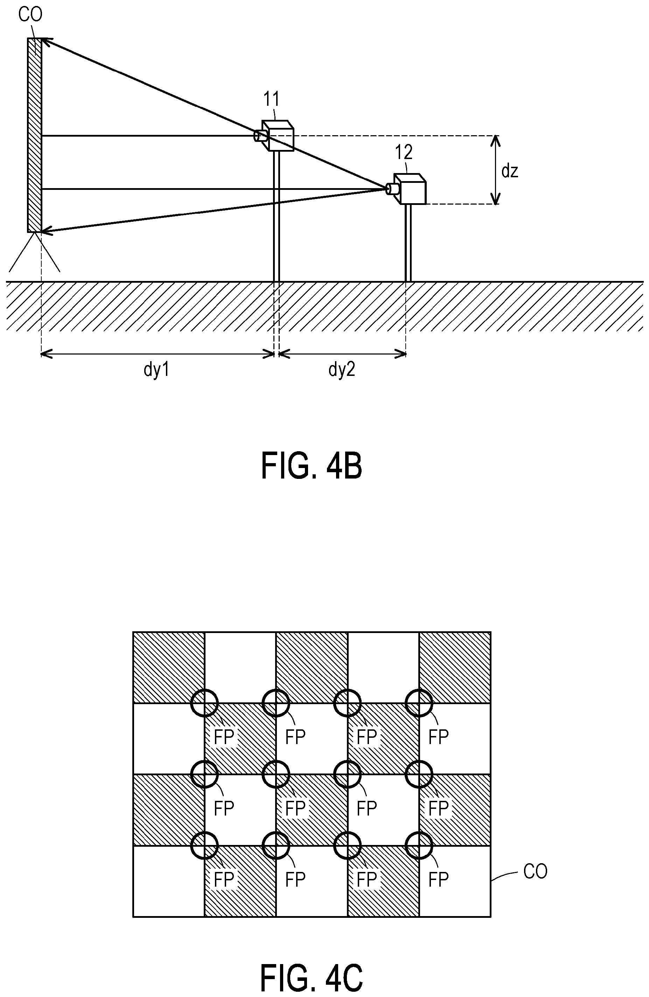

FIG. 3 is a flow chart of a calibration method of a virtual guidance line according to an embodiment of the disclosure. Please refer to FIG. 3. The processor 120 recognizes a first image position of one or more feature points in a first test image. Specifically, a visual field of the first test image corresponds to a visual field of an environmental image. For example, FIG. 4A is a schematic diagram of a calibration scenario according to an embodiment of the disclosure. FIG. 4B is a schematic diagram of a disposal position according to an embodiment of the disclosure. Please refer to FIG. 4A and FIG. 4B. Image capturing apparatus 11 and 12 (for the implementation aspects and functions, please refer to the foregoing description of the image capturing apparatus 10) are respectively disposed near a rearview mirror of a vehicle C (taking a car as an example, but the disclosure is not limited thereto) and near the driver's head. The image capturing apparatus 11 serves as a sensing element of the driving control assistance system 50. The first test image is an image captured from a visual field of the image capturing apparatus 11. In addition, a visual field of the image capturing apparatus 12 is assumed to be a viewing field of the driver. A second test image (to be described in detail later) is an image captured from the visual field of the image capturing apparatus 12.

FIG. 4C is a schematic diagram of a calibration object CO according to an embodiment of the disclosure. Please refer to FIG. 4A to FIG. 4C. The calibration object CO is, for example, a checkerboard drawn with alternating colors of black and white. The processor 120 may define an intersection of a black square and a white square as a feature point FP. The processor 120 may recognize feature points in any test image based on object detection technology. For example, the processor 120 may apply machine learning based algorithms (such as YOLO (You Only Look Once), Region Based Convolutional Neural Networks (R-CNN), or Fast R-CNN or feature matching based algorithms (such as histogram of oriented gradient (HOG), scale-invariant feature transform (SIFT), Harr, or speeded up robust features (SURF) feature matching) to implement object detection. Therefore, the feature points FP appearing in FIG. 4C may be recognized. An image position of each feature point FP in the test image may be accordingly determined. For example, the first image position of the feature point FP in the first test image is determined. The image position may be coordinates or a relative position.

It should be noted that the shape, pattern and/or color of the feature point FP is not limited to what is shown in FIG. 4A to FIG. 4C, and may be adjusted according to actual needs.

The calibration object CO may be disposed standing as shown in FIG. 4B, and have the checkerboard pattern with the feature points FP facing the image capturing apparatus 11 and 12. In addition, the calibration object CO may be respectively disposed at vehicle body reference points A1, A2, A3, and A4 as shown in FIG. 4A, or respectively disposed at tire reference points T1, T2, T3, and T4 as shown in FIG. 4A. The vehicle body reference points A1, A2, A3, and A4 correspond to four positions of the edges of a vehicle body CB of the vehicle C (for example, generally located near four tires CT, but more outward than the tires CT). The tire reference points T1, T2, T3, and T4 correspond to the four tires CT of the vehicle C (respectively more inward than the vehicle body reference points A1, A2, A3, and A4). Therefore, a spacing between the vehicle body reference points A1 and A3 is approximately a spacing between the two tires CT on a left side of the vehicle C. A spacing between the vehicle body reference points A2 and A4 is approximately a spacing between the two tires CT on a right side of the vehicle C. Alternatively, a spacing between the tire reference points T1 and T3 is approximately the spacing between the two tires CT on the left side of the vehicle C. A spacing between the tire reference points T2 and T4 is approximately the spacing between the two tires CT on the right side of the vehicle C.

Please refer to FIG. 4B. A horizontal distance dy1 between the image capturing apparatus 11 and the calibration object CO disposed at the vehicle body reference points A1 and A2 or at the tire reference points T1 and T2 is, for example, approximately 60 to 90 centimeters. A horizontal distance dy2 between the image capturing apparatus 11 and the image capturing apparatus 12 is, for example, approximately 15 to 30 centimeters. A vertical distance dz between the image capturing apparatus 11 and the image capturing apparatus 12 is, for example, approximately 5 to 25 centimeters. The processor 120 may record the foregoing relative distances and/or relative coordinates in the real world or world coordinate system. However, the relative positions between the image capturing apparatus 11 and 12 and the calibration object CO may still be adjusted according to actual needs.

Please refer to FIG. 3. The processor 120 recognizes a second image position of one or more feature points in the second test image (step S320). Specifically, a visual field of the second test image corresponds to the driver's viewing field. For detailed description about recognizing the second image position, please refer to the description for the first image position in step S310, which will not be repeated here. For example, the second image position of the feature point FP in the second test image is determined.

The processor 120 may determine a position of a virtual guidance line in the guidance image according to the first image position and the second image position of the feature points (step S330). Specifically, the guidance image is an image configured to be displayed by the display apparatus 30. The virtual guidance line is a virtual object in the guidance image. In one embodiment, the virtual guidance line includes a tire guidance line. The tire guidance line is extended from the tire CT of the vehicle C as shown in FIG. 4A toward the front of the vehicle C (corresponding to an upper part of the figure) from the driver's viewing angle. In another embodiment, the virtual guidance line includes a vehicle body guidance line. The vehicle body guidance line is extended from an edge of the vehicle body of the vehicle C as shown in FIG. 4A toward the front of the vehicle C (corresponding to the upper part of the figure) from the driver's viewing angle. In some embodiments, compared to a longitudinal axis of the vehicle C (for example, perpendicular to the figure), the vehicle body guidance line is more outward than the tire guidance line.

The first image position corresponds to an image coordinate system of the image capturing apparatus 11. The second image position corresponds to an image coordinate system of the image capturing apparatus 12 or the driver. A position of the guidance image corresponds to a coordinate system of the display apparatus 30. Therefore, a coordinate conversion needs to be performed.

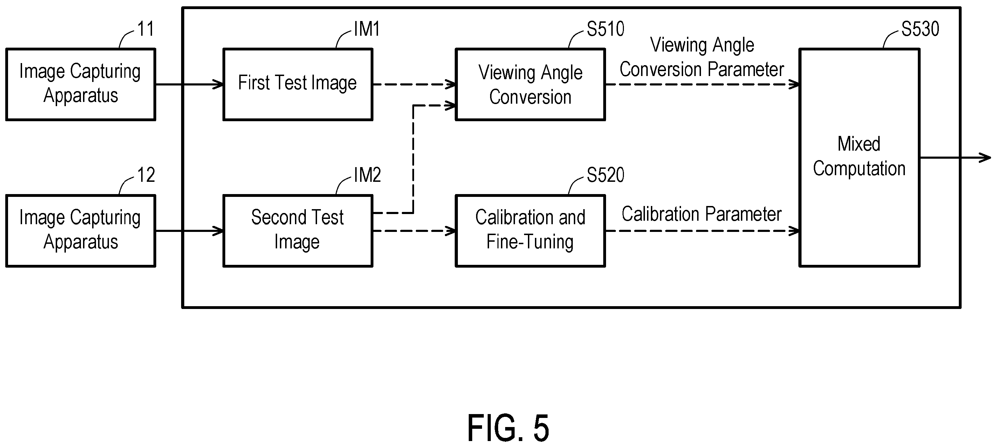

FIG. 5 is a schematic diagram of a coordinate conversion architecture according to an embodiment of the disclosure. Please refer to FIG. 5. The processor 120 may perform a viewing angle conversion on a first test image IM1 obtained by the image capturing apparatus 11 and a second test image IM2 obtained by the image capturing apparatus 12 (step S510). To ensure that the guidance image (including the virtual guidance line) displayed/projected by the display apparatus 30 may be accurately superimposed on the actual environment in the driver's visual field, a coordinate conversion process is utilized in an embodiment of the disclosure.

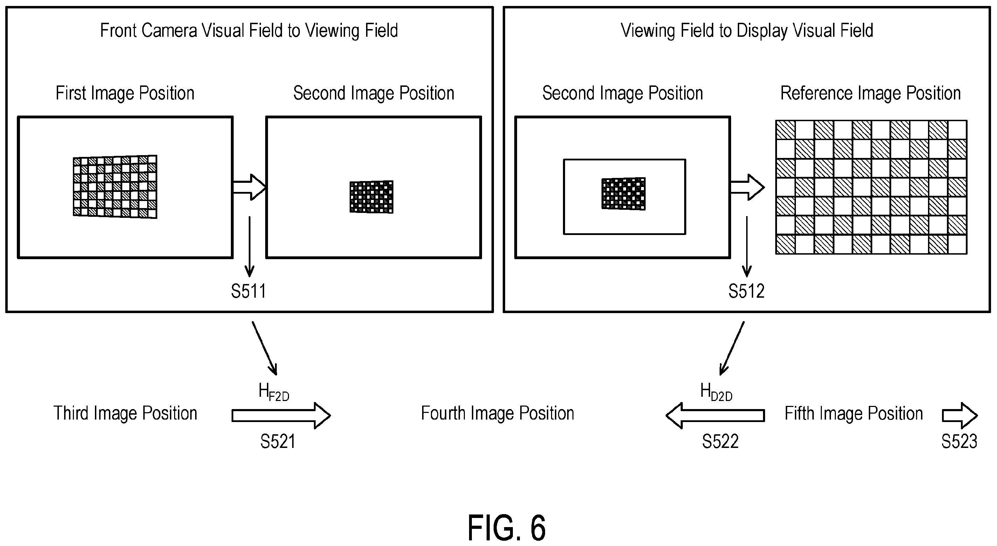

FIG. 6 is a schematic diagram of a coordinate conversion process according to an embodiment of the disclosure. Please refer to FIG. 6. The processor 120 may determine a first conversion matrix from a first image position of one or more feature points in the first test image IM1 to a second image position of the same feature points in the second test image IM2 (step S511). Specifically, the first conversion matrix is a coordinate conversion from a visual field of a front camera (corresponding to the visual field of the image capturing apparatus 11 in FIG. 4A) to a driver's visual field (corresponding to the visual field of the image capturing apparatus 12 in FIG. 4A). By the first image position and the second image position of the one or more same feature points, the processor 120 may calculate to obtain a homography matrix H_{F2D} (that is, the first conversion matrix) through an image processing algorithm (such as a feature point matching based algorithm). The first conversion matrix H_{F2D} represents a projection transformation relationship from the first image position to the second image position of the driver's viewing angle.

The processor 120 may determine a second conversion matrix from the second image position to a reference image position (step S512). Specifically, the reference image position is located on an image configured to be displayed by the display apparatus 30. For example, an original image of a checkerboard to be projected is input to the optical engine 32 (such as a picture generation unit (PGU)) shown in FIG.2. The reference image position is an image position of one or more feature points in the original image. The second conversion matrix is a coordinate conversion from the driver's visual field (corresponding to the visual field of the image capturing apparatus 12 in FIG. 4A) to a projection coordinate system/display coordinate system of the display apparatus 30. By the second image position and the reference image position of the one or more same feature points, the processor 120 may calculate to obtain another homography matrix H_{D2D} (that is, the second conversion matrix) through an image processing algorithm (such as a feature point matching based algorithm). The second conversion matrix H_{D2H} represents a projection transformation relationship from the second image position of the driver's viewing angle to the reference image position of the display apparatus 30.

Please refer to FIG. 5. The processor 120 may also perform calibration fine-tuning according to the second test image IM2 (step S520). For example, a calibration fine-tuning algorithm is configured to compensate for distortion that might exist in the actual optical system, installation errors, or to resolve subtle deviations not fully covered by an initial calibration model, ensuring that a finally projected virtual object (such as the virtual guidance line) may be accurately aligned with the real-world object (such as an edge of the vehicle body) seen by the driver's eyes.

The processor 120 may use a calibration parameter obtained from the calibration fine-tuning (such as a parameter configured for calibrating a geometric relationship between elements, optical properties and/or a corresponding relationship with the real world) and a viewing angle conversion parameter (such as the first conversion matrix H_{F2D} and/or the second conversion matrix H_{D2H}) to perform a mixed computation (step S530), for example, data fusion, application scenario adjustment, content composition or arbitration and/or formatted output.

After the foregoing calibration calculation is completed, and the first conversion matrix H_{F2D} and the second conversion matrix H_{D2H} are obtained, the matrices may be stored and applied to a real-time operation of the guidance processing apparatus 100. For example, when the ADAS function of the guidance processing apparatus 100 (running on the processor 120 or an electronic control unit), the position/coordinates of the virtual guidance line in the guidance image is calculated based on the image from the image capturing apparatus 11 (such as a front view camera), the processor 120 may use the matrices to perform the coordinate conversion.

Specifically, please refer to FIG. 6. The processor 120 may convert a third image position to a fourth image position through the first conversion matrix H_{F2D} (step S521). Specifically, the third image position is a position of one or more virtual guidance lines in the visual field of the environment image obtained by the image capturing apparatus 11. The processor 120 may convert this visual field to the fourth image position of the driver's viewing field through the first conversion matrix H_{F2D}. That is, the fourth image position is a position of one or more virtual guidance lines in the viewing field.

Next, the processor may convert the fourth image position to a fifth image position through the second conversion matrix H_{D2H} (step S522). Specifically, the processor 120 may convert the viewing field to the fifth image position of the display coordinate system or the projection coordinate system of the display apparatus 30 through the second conversion matrix H_{D2H}. That is, the fifth image position is a position of one or more virtual guidance lines in the display coordinate system or the projection coordinate system.

The processor 120 may determine the position of the one or more virtual guidance lines in the guidance image according to the fifth image position (step S523). The fifth image position directly serves as the position of the virtual guidance line in the guidance image. Alternatively, the fifth image position is calibrated and fine-tuned to obtain the position of the virtual guidance line in the guidance image. The fifth image position or the calibrated fifth image position may be transmitted to the display apparatus 30. In this way, the display apparatus 30 may project the corresponding virtual guidance line at a correct position, ensuring to be accurately aligned with the actual object in the driver's visual field.

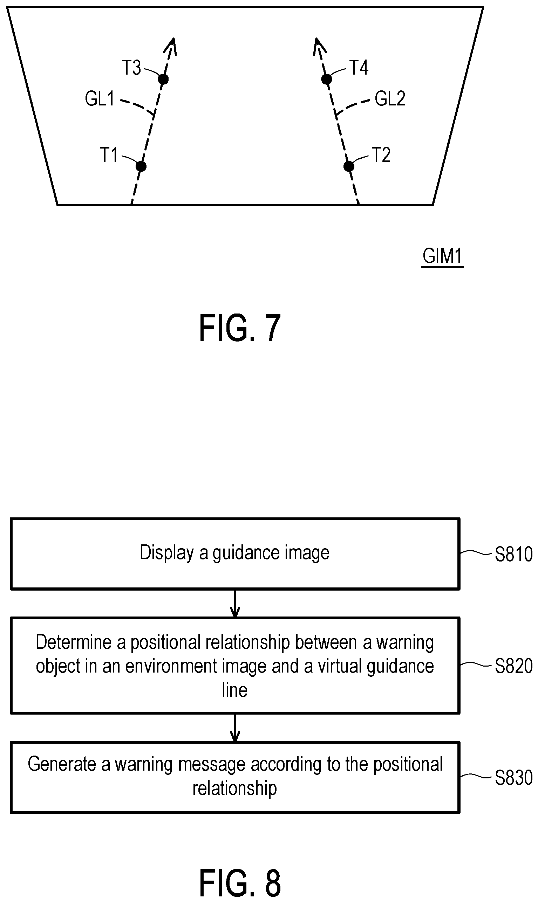

FIG. 7 is a schematic diagram of a guidance image GIM1 according to an embodiment of the disclosure. Please refer to FIG. 7. Feature points include one or more first points (such as feature points of the reference object CO at the tire reference point T1 or the vehicle body reference point A1), one or more second points (such as feature points of the reference object CO at the tire reference point T2 or the vehicle body reference point A2), one or more third points (such as feature points of the reference object CO at the tire reference point T3 or the vehicle body reference point A3), and one or more fourth points (such as feature points of the reference object CO at the tire reference point T4 or the vehicle body reference point A4), which respectively correspond to the four reference points of the four tires CT of the vehicle C shown in FIG. 4A (such as the tire reference points T1, T2, T3, and T4) or the four reference points of the edges of the vehicle body of the vehicle C (such as the vehicle body reference points A1, A2, A3, and A4).

The processor 120 may take a connection between a representation position of the one or more first points (taking the tire reference point T1 as an example) and a representation position of the one or more third points (taking the tire reference point T3 as an example) as a virtual guidance line GL1. For example, a slope of the representation positions of the first point and the third point is used to calculate a position of the virtual guidance line GL1. The first point and the third point correspond to one side of the vehicle C, for example, the left side of the vehicle C shown in FIG. 4A. In addition, the processor 120 may take a connection between a representation position of the one or more second points (taking the tire reference point T2 as an example) and a representation position of the one or more fourth points (taking the tire reference point T4 as an example) as a virtual guidance line GL2. For example, a slope of the representation positions of the second point and the fourth point is used to calculate a position of the virtual guidance line GL2. The second point and the fourth point correspond to another side of the vehicle C, for example, the right side of the vehicle C shown in FIG. 4A. It should be noted that the length, shape, and size of the virtual guidance lines GL1 and GL2 may be adjusted according to needs.

In an embodiment, the processor 120 may determine in the driver's visual field that the visual horizon and trend of the virtual guidance lines GL1 and GL2 are compatible with a reference guidance line.

In an embodiment, considering a scenario of a steering wheel turning, the processor 120 may utilize a curve fit manner to determine the virtual guidance lines GL1 and GL2 in order to be adapted to scenarios of turning.

FIG. 8 is a flow chart of a guidance instruction method according to an embodiment of the disclosure. Please refer to FIG. 8. The processor 120 displays a guidance image through the display apparatus 30 (step S810). As introduced in step S521 to step S523 of FIG. 6, the fifth image position corresponding to the virtual guidance line may be configured to determine the image position or coordinates of the virtual guidance line by the display apparatus 30.

In an embodiment, the display apparatus 30 is a head-up display. The guidance image is configured to be projected to a windshield or a reflector of a vehicle.

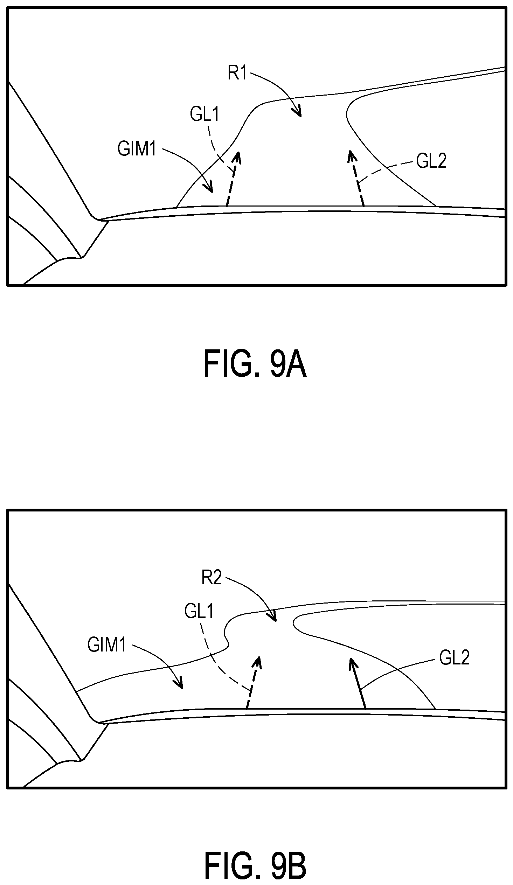

For example, FIG. 9 is a schematic diagram of a first application scenario according to an embodiment of the disclosure. Please refer to FIG. 9. The guidance image GIM1 is presented on the front windshield. In terms of the driver's viewing field, the virtual guidance line GL1 corresponds to a forward route of a left tire. The virtual guidance line GL2 corresponds to a forward route of a right tire. A presentation of the virtual guidance lines GL1 and GL2 may help the driver understand a position that the vehicle is about to arrive (according to a driving speed, might be a position after 1 second or 500 milliseconds). In addition, through a projection manner, a relative position between a road R1 in the real world and the virtual guidance lines GL1 and GL2 may be confirmed.

Please refer to FIG. 8. The processor 120 determines a positional relationship between a warning object in an environment image and a virtual guidance line (step S820). Specifically, a visual field of the environment image corresponds to a forward route of the vehicle. As described previously, the environment image is obtained through the image capturing apparatus 11 as shown in FIG. 4A. Therefore, the visual field of the environment image is the visual field of the image capturing apparatus 11. The image capturing apparatus 11, for example, is a front view camera, so the environment captured in the environment image is an environment in front of the environment image. Assuming a scenario of the vehicle moving forward, the visual field of the environment image corresponds to the forward route of the vehicle.

The processor 120 may recognize the warning object in the environment image based on object detection technology, and accordingly determine an image position of the warning object in the environment image. In an embodiment, the warning object is another vehicle or a road edge. In some embodiments, the warning object may be a person, animal, building, or other type of object.

In an embodiment, the processor 120 may map the warning object to a coordinate system of the guidance image to generate an object position. As described previously regarding the viewing angle or coordinate conversion, the coordinate system corresponding to the image capturing apparatus 11 is different from the coordinate system of the display apparatus 30. The processor 120, for example, sequentially converts the image position/coordinates of the warning object in the environment image through the first conversion matrix and the second conversion matrix to a position/coordinates in the coordinate system of the display apparatus 30, and accordingly serves as the object position.

At this time, the coordinate system to which the object position belongs is a same as a coordinate system of the virtual guidance line. The processor 120 may determine whether the object position overlaps with the one or more virtual guidance lines or whether a distance between the object position and the one or more virtual guidance lines is less than a warning threshold value (that is, a positional relationship). The virtual guidance lines involve multiple positions/coordinates (that is, a connection of the positions/coordinates). The processor 120, for example, may determine whether the object position is a same as the multiple positions/coordinates corresponding to the virtual guidance lines to determine whether the object position overlaps with the virtual guidance lines. If the object position is the same as the multiple positions/coordinates corresponding to the virtual guidance lines, the processor 120 determines that the object position of the warning object meets a warning condition. Conversely, the processor 120 determines that the object position of the warning object does not meet the warning condition. On the other hand, the processor 120 may, for example, determine whether the distance between the object position and the virtual guidance line is less than 30 centimeters, 50 centimeters, or 70 centimeters (that is, a warning threshold value). If the distance between the object position and the virtual guidance line is less than the warning threshold value, the processor 120 determines that the object position of the warning object meets the warning condition. Conversely, the processor 120 determines that the object position of the warning object does not meet the warning condition.

Please refer to FIG. 8. The processor 120 generates a warning message according to the positional relationship (step S830). Specifically, when the positional relationship is that the object position of the warning object meets the warning condition (for example, the object position is the same as the multiple positions/coordinates corresponding to the virtual guidance lines, or the distance between the object position and the virtual guidance line is less than the warning threshold value), the processor 120 may generate the warning message. Conversely, the processor 120 may prohibit/not generate the warning message.

In an embodiment, the processor 120 may change a visual presentation form of the one or more virtual guidance lines. The visual presentation form may be color, pattern, shape, flashing manner, and/or size. However, the disclosure is not limited thereto.

For example, FIG. 9B is a schematic diagram of a second application scenario according to an embodiment of the disclosure. Please refer to FIG. 9B. The virtual guidance line GL2 is less than 30 centimeters away from an edge of a road R2. At this time, the processor 120 changes the virtual guidance line GL2 to red (the virtual guidance line GL1, for example, is green).

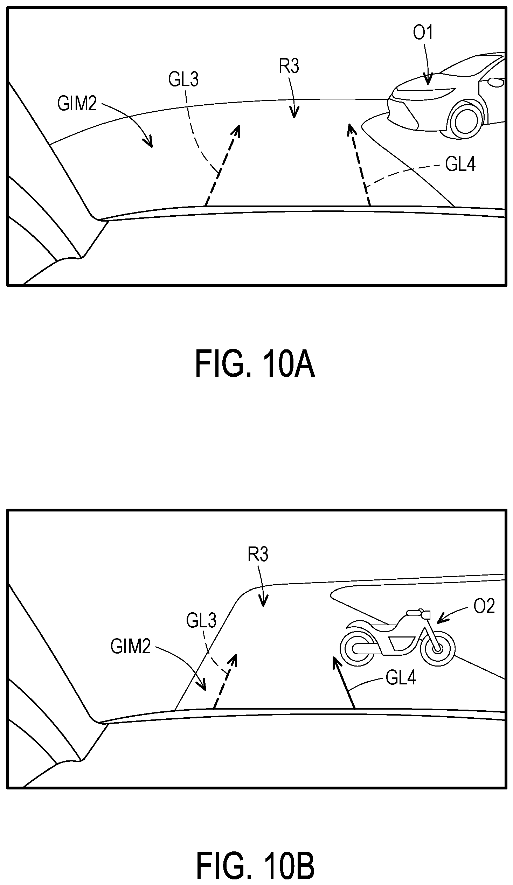

FIG. 10A is a schematic diagram of a third application scenario according to an embodiment of the disclosure. Please refer to FIG. 10A. A virtual guidance line GL3 of a guidance image GIM2, for example, corresponds to the connection of the vehicle body reference points A1 and A3 shown in FIG. 4A. A virtual guidance line GL4, for example, corresponds to the connection of the vehicle body reference points A2 and A4 shown in FIG. 4A. The vehicle is driving on a road R3. It is assumed that a distance between the virtual guidance line GL4 and an object O1 (such as a car) is greater than 50 centimeters. At this time, both the virtual guidance lines GL3 and GL4 are green.

FIG. 10B is a schematic diagram of a fourth application scenario according to an embodiment of the disclosure. Please refer to FIG. 10B. The vehicle is driving on a road R4. It is assumed that a distance between the virtual guidance line GL4 and an object O2 (such as a motorcycle) is less than 30 centimeters. At this time, the virtual guidance line GL4 changes to red.

In an embodiment, the processor 120 may transmit a control command according to the warning message. The control command is configured to drive or assist the vehicle. For example, the driving control assistance system 50 generates a warning information on the user interface according to the control command. For another example, the driving control assistance system 50 drives the motor and steering wheel according to the control command, allowing the vehicle to brake, decelerate, or turn.

In summary, in the guidance instruction method and the guidance processing apparatus of the embodiment of the disclosure, the reference points provided with the feature points are defined based on the front position of the vehicle body or the tire, positions of the feature points in the image are converted from the visual field of the front view camera to the viewing field and then converted to the display/projection coordinate system of the display apparatus, and the position of the virtual guidance line in the guidance image is accordingly determined in the display/projection coordinate system. Next, the guidance image including the virtual guidance line is displayed. The warning message is generated according to the relative position between the virtual guidance line and the warning object in the image obtained by the front view camera. In this way, the driver may be helped to determine the safety status of an actual position of the vehicle, thereby enhancing driving safety.

## Claims

1. A guidance instruction method, implemented through a processor, **characterized in that** the guidance instruction method comprises:
displaying a guidance image (GIM1, GIM2), wherein at least one virtual guidance line (GL1, GL2, GL3, GL4) in the guidance image (GIM1, GIM2) corresponds to a forward route of a vehicle (C);
determining a positional relationship between a warning object in an environment image and the at least one virtual guidance line (GL1, GL2, GL3, GL4), wherein a visual field of the environment image corresponds to the forward route of the vehicle (C); and
generating a warning message according to the positional relationship, wherein the warning message is configured to indicate the warning object.

2. The guidance instruction method according to claim 1, wherein the step of determining the positional relationship between the warning object in the environment image and the at least one virtual guidance line (GL1, GL2, GL3, GL4) comprises:
mapping the warning object to a coordinate system of the guidance image (GIM1, GIM2) to generate an object position; and
determining whether the object position overlaps with the at least one virtual guidance line (GL1, GL2, GL3, GL4) or is at a distance less than a warning threshold value from the at least one virtual guidance line (GL1, GL2, GL3, GL4).

3. The guidance instruction method according to claim 1 or claim 2, wherein the step of generating the warning message according to the positional relationship comprises:
changing a visual presentation form of the at least one virtual guidance line (GL1, GL2, GL3, GL4).

4. The guidance instruction method according to any one of claims 1-3, wherein the warning object is another vehicle or a road edge;
the at least one virtual guidance line (GL1, GL2, GL3, GL4) comprises a tire guidance line, and the tire guidance line is extended from a tire (CT) of the vehicle (C) toward a front of the vehicle (C); or the at least one virtual guidance line (GL1, GL2, GL3, GL4) comprises a vehicle body guidance line, and the vehicle body guidance line is extended from an edge of a vehicle body (CB) of the vehicle toward a front of the vehicle (C).

5. The guidance instruction method according to any one of claims 1-4, further comprising:
recognizing a first image position of at least one feature point (FP) in a first test image, wherein a visual field of the first test image corresponds to the visual field of the environment image;
recognizing a second image position of the at least one feature point (FP) in a second test image, wherein a visual field of the second test image corresponds to a viewing field; and
determining a position of the at least one virtual guidance line (GL1, GL2, GL3, GL4) in the guidance image (GIM1, GIM2) according to the first image position and the second image position of the at least one feature point (FP).

6. The guidance instruction method according to claim 5, wherein the step of determining the position of the at least one virtual guidance line (GL1, GL2, GL3, GL4) in the guidance image (GIM1, GIM2) according to the first image position and the second image position of the at least one feature point (FP) comprises:
determining a first conversion matrix (H_{F2D}) from the first image position to the second image position;
determining a second conversion matrix (H_{D2D}) from the second image position to a reference image position, wherein the reference image position is located on an image configured to be displayed;
converting a third image position to a fourth image position through the first conversion matrix (H_{F2D}), wherein the third image position is a position of at least one virtual guidance line (GL1, GL2, GL3, GL4) in the visual field of the environment image;
converting the fourth image position to a fifth image position through the second conversion matrix (H_{D2D}); and
determining the position of the at least one virtual guidance line (GL1, GL2, GL3, GL4) in the guidance image (GIM1, GIM2) according to the fifth image position.

7. The guidance instruction method according to claim 5, wherein the at least one feature point (FP) comprises at least one first point, at least one second point, at least one third point and at least one fourth point respectively corresponding to four reference points of four tires (CT) of the vehicle (C) or edges of a vehicle body (CB) of the vehicle (C), and the step of determining the position of the at least one virtual guidance line (GL1, GL2, GL3, GL4) in the guidance image (GIM1, GIM2) according to the first image position and the second image position of the at least one feature point (FP) comprises:
taking a connection between a representation position of the at least one first point and a representation position of the at least one third point to serve as one of the virtual guidance lines (GL1, GL2, GL3, GL4), wherein the at least one first point and the at least one third point correspond to one side of the vehicle (C); and
taking a connection between a representation position of the at least one second point and a representation position of the at least one fourth point to serve as another one of the virtual guidance lines (GL1, GL2, GL3, GL4), wherein the at least one second point and the at least one fourth point correspond to another side of the vehicle (C).

8. The guidance instruction method according to any one of claims 1-7, wherein the guidance image (GIM1, GIM2) is configured to be projected to a windshield or a reflector of the vehicle (C).

9. A guidance processing apparatus (100), comprising:
a memory (110), storing code; and
a processor (120), coupled to the memory (110), **characterized in that** the processor (120) loads the code and executes:
displaying a guidance image (GIM1, GIM2), wherein at least one virtual guidance line (GL1, GL2, GL3, GL4) in the guidance image (GIM1, GIM2) corresponds to a forward route of a vehicle (C);
determining a positional relationship between a warning object in an environment image and the at least one virtual guidance line (GL1, GL2, GL3, GL4), wherein a visual field of the environment image corresponds to the forward route of the vehicle (C); and
generating a warning message according to the positional relationship, wherein the warning message is configured to indicate the warning object.

10. The guidance processing apparatus (100) according to claim 9, wherein the processor (120) further executes:
mapping the warning object to a coordinate system of the guidance image (GIM1, GIM2) to generate an object position; and
determining whether the object position overlaps with the at least one virtual guidance line (GL1, GL2, GL3, GL4) or is at a distance less than a warning threshold value from the at least one virtual guidance line (GL1, GL2, GL3, GL4).

11. The guidance processing apparatus (100) according to claim 9 or claim 10, wherein the processor (120) further executes:
changing a visual presentation form of the at least one virtual guidance line (GL1, GL2, GL3, GL4).

12. The guidance processing apparatus (100) according to any one of claims 9-11, wherein the warning object is another vehicle or a road edge;
the at least one virtual guidance line (GL1, GL2, GL3, GL4) comprises a tire guidance line, and the tire guidance line is extended from a tire (CT) of the vehicle (C) toward a front of the vehicle (C); or
the at least one virtual guidance line (GL1, GL2, GL3, GL4) comprises a vehicle body guidance line, and the vehicle body guidance line is extended from an edge of a vehicle body (CB) of the vehicle (C) toward a front of the vehicle (C).

13. The guidance processing apparatus (100) according to any one of claims 9-12, wherein the processor (120) further executes:
recognizing a first image position of at least one feature point (FP) in a first test image, wherein a visual field of the first test image corresponds to the visual field of the environment image;
recognizing a second image position of the at least one feature point (FP) in a second test image, wherein a visual field of the second test image corresponds to a viewing field; and
determining a position of the at least one virtual guidance line (GL1, GL2, GL3, GL4) in the guidance image (GIM1, GIM2) according to the first image position and the second image position of the at least one feature point (FP).

14. The guidance processing apparatus (100) according to claim 13, wherein the processor (120) further executes:
determining a first conversion matrix (H_{F2D}) from the first image position to the second image position;
determining a second conversion matrix (H_{D2D}) from the second image position to a reference image position, wherein the reference image position is located on an image configured to be displayed;
converting a third image position to a fourth image position through the first conversion matrix (H_{F2D}), wherein the third image position is a position of at least one virtual guidance line (GL1, GL2, GL3, GL4) in the visual field of the environment image;
converting the fourth image position to a fifth image position through the second conversion matrix (H_{D2D}); and
determining the position of the at least one virtual guidance line (GL1, GL2, GL3, GL4) in the guidance image (GIM1, GIM2) according to the fifth image position.

15. The guidance processing apparatus (100) according to claim 13, wherein the at least one feature point (FP) comprises at least one first point, at least one second point, at least one third point and at least one fourth point respectively corresponding to four reference points of four tires (CT) of the vehicle (C) or edges of a vehicle body (CB) of the vehicle (C), and the processor (120) further executes:
taking a connection of a representation position of the at least one first point and a representation position of the at least one third point to serve as one of the virtual guidance lines (GL1, GL2, GL3, GL4), wherein the at least one first point and the at least one third point correspond to one side of the vehicle (C); and
taking a connection of a representation position of the at least one second point and a representation position of the at least one fourth point to serve as another one of the virtual guidance lines (GL1, GL2, GL3, GL4), wherein the at least one second point and the at least one fourth point correspond to another side of the vehicle (C).

## Amended claims

### Amended claims in accordance with Rule 137(2) EPC.

1. A guidance instruction method, implemented through a processor, wherein the guidance instruction method comprises:
displaying a guidance image (GIM1, GIM2), wherein at least one virtual guidance line (GL1, GL2, GL3, GL4) in the guidance image (GIM1, GIM2) corresponds to a forward route of a vehicle (C);
determining a positional relationship between a warning object in an environment image and the at least one virtual guidance line (GL1, GL2, GL3, GL4), wherein a visual field of the environment image corresponds to the forward route of the vehicle (C); and
generating a warning message according to the positional relationship, wherein the warning message is configured to indicate the warning object;
**characterized by** the guidance instruction method further comprising:
recognizing a first image position of at least one feature point (FP) in a first test image, wherein a visual field of the first test image corresponds to the visual field of the environment image;
recognizing a second image position of the at least one feature point (FP) in a second test image, wherein a visual field of the second test image corresponds to a viewing field of the driver; and
determining a position of the at least one virtual guidance line (GL1, GL2, GL3, GL4) in the guidance image (GIM1, GIM2) according to the first image position and the second image position of the at least one feature point (FP).

2. The guidance instruction method according to claim 1, wherein the step of determining the positional relationship between the warning object in the environment image and the at least one virtual guidance line (GL1, GL2, GL3, GL4) comprises:
mapping the warning object to a coordinate system of the guidance image (GIM1, GIM2) to generate an object position; and
determining whether the object position overlaps with the at least one virtual guidance line (GL1, GL2, GL3, GL4) or is at a distance less than a warning threshold value from the at least one virtual guidance line (GL1, GL2, GL3, GL4).

3. The guidance instruction method according to claim 1 or claim 2, wherein the step of generating the warning message according to the positional relationship comprises:
changing a visual presentation form of the at least one virtual guidance line (GL1, GL2, GL3, GL4).

4. The guidance instruction method according to any one of claims 1-3, wherein the warning object is another vehicle or a road edge;
the at least one virtual guidance line (GL1, GL2, GL3, GL4) comprises a tire guidance line, and the tire guidance line is extended from a tire (CT) of the vehicle (C) toward a front of the vehicle (C); or the at least one virtual guidance line (GL1, GL2, GL3, GL4) comprises a vehicle body guidance line, and the vehicle body guidance line is extended from an edge of a vehicle body (CB) of the vehicle toward a front of the vehicle (C).

5. The guidance instruction method according to claim 1, wherein the step of determining the position of the at least one virtual guidance line (GL1, GL2, GL3, GL4) in the guidance image (GIM1, GIM2) according to the first image position and the second image position of the at least one feature point (FP) comprises:
determining a first conversion matrix (H_{F2D}) from the first image position to the second image position;
determining a second conversion matrix (H_{D2D}) from the second image position to a reference image position, wherein the reference image position is located on an image configured to be displayed;
converting a third image position to a fourth image position through the first conversion matrix (H_{F2D}), wherein the third image position is a position of at least one virtual guidance line (GL1, GL2, GL3, GL4) in the visual field of the environment image;
converting the fourth image position to a fifth image position through the second conversion matrix (H_{D2D}); and
determining the position of the at least one virtual guidance line (GL1, GL2, GL3, GL4) in the guidance image (GIM1, GIM2) according to the fifth image position.

6. The guidance instruction method according to claim 1, wherein the at least one feature point (FP) comprises at least one first point, at least one second point, at least one third point and at least one fourth point respectively corresponding to four reference points of four tires (CT) of the vehicle (C) or edges of a vehicle body (CB) of the vehicle (C), and the step of determining the position of the at least one virtual guidance line (GL1, GL2, GL3, GL4) in the guidance image (GIM1, GIM2) according to the first image position and the second image position of the at least one feature point (FP) comprises:
taking a connection between a representation position of the at least one first point and a representation position of the at least one third point to serve as one of the virtual guidance lines (GL1, GL2, GL3, GL4), wherein the at least one first point and the at least one third point correspond to one side of the vehicle (C); and
taking a connection between a representation position of the at least one second point and a representation position of the at least one fourth point to serve as another one of the virtual guidance lines (GL1, GL2, GL3, GL4), wherein the at least one second point and the at least one fourth point correspond to another side of the vehicle (C).

7. The guidance instruction method according to any one of claims 1-6, wherein the guidance image (GIM1, GIM2) is configured to be projected to a windshield or a reflector of the vehicle (C).

8. A guidance processing apparatus (100), comprising:
a memory (110), storing code; and
a processor (120), coupled to the memory (110), **characterized in that** the processor (120) is configured to load the code and execute:
displaying a guidance image (GIM1, GIM2), wherein at least one virtual guidance line (GL1, GL2, GL3, GL4) in the guidance image (GIM1, GIM2) corresponds to a forward route of a vehicle (C);
determining a positional relationship between a warning object in an environment image and the at least one virtual guidance line (GL1, GL2, GL3, GL4), wherein a visual field of the environment image corresponds to the forward route of the vehicle (C); and
generating a warning message according to the positional relationship, wherein the warning message is configured to indicate the warning object;
**characterized in that** the processor (120) is configured to further execute:
recognizing a first image position of at least one feature point (FP) in a first test image, wherein a visual field of the first test image corresponds to the visual field of the environment image;
recognizing a second image position of the at least one feature point (FP) in a second test image, wherein a visual field of the second test image corresponds to a viewing field of the driver;
determining a position of at least one virtual guidance line (GL1, GL2, GL3, GL4) in a guidance image (GIM1, GIM2) according to the first image position and the second image position of the at least one feature point (FP).

9. The guidance processing apparatus (100) according to claim 8, wherein the processor (120) further executes:
mapping the warning object to a coordinate system of the guidance image (GIM1, GIM2) to generate an object position; and
determining whether the object position overlaps with the at least one virtual guidance line (GL1, GL2, GL3, GL4) or is at a distance less than a warning threshold value from the at least one virtual guidance line (GL1, GL2, GL3, GL4).

10. The guidance processing apparatus (100) according to claim 8 or claim 9, wherein the processor (120) further executes:
changing a visual presentation form of the at least one virtual guidance line (GL1, GL2, GL3, GL4).

11. The guidance processing apparatus (100) according to any one of claims 8-10, wherein the warning object is another vehicle or a road edge;
the at least one virtual guidance line (GL1, GL2, GL3, GL4) comprises a tire guidance line, and the tire guidance line is extended from a tire (CT) of the vehicle (C) toward a front of the vehicle (C); or
the at least one virtual guidance line (GL1, GL2, GL3, GL4) comprises a vehicle body guidance line, and the vehicle body guidance line is extended from an edge of a vehicle body (CB) of the vehicle (C) toward a front of the vehicle (C).

12. The guidance processing apparatus (100) according to claim 8, wherein the processor (120) further executes:
determining a first conversion matrix (H_{F2D}) from the first image position to the second image position;
determining a second conversion matrix (H_{D2D}) from the second image position to a reference image position, wherein the reference image position is located on an image configured to be displayed;
converting a third image position to a fourth image position through the first conversion matrix (H_{F2D}), wherein the third image position is a position of at least one virtual guidance line (GL1, GL2, GL3, GL4) in the visual field of the environment image;
converting the fourth image position to a fifth image position through the second conversion matrix (H_{D2D}); and
determining the position of the at least one virtual guidance line (GL1, GL2, GL3, GL4) in the guidance image (GIM1, GIM2) according to the fifth image position.

13. The guidance processing apparatus (100) according to claim 8, wherein the at least one feature point (FP) comprises at least one first point, at least one second point, at least one third point and at least one fourth point respectively corresponding to four reference points of four tires (CT) of the vehicle (C) or edges of a vehicle body (CB) of the vehicle (C), and the processor (120) further executes:
taking a connection of a representation position of the at least one first point and a representation position of the at least one third point to serve as one of the virtual guidance lines (GL1, GL2, GL3, GL4), wherein the at least one first point and the at least one third point correspond to one side of the vehicle (C); and
taking a connection of a representation position of the at least one second point and a representation position of the at least one fourth point to serve as another one of the virtual guidance lines (GL1, GL2, GL3, GL4), wherein the at least one second point and the at least one fourth point correspond to another side of the vehicle (C).
